# EUROPÄISCHE PATENTSCHRIFT

(11) **EP 2 656 943 B1**
(45) Veröffentlichungstag und Bekanntmachung des Hinweises auf die Patenterteilung: **10.01.2018**
(21) Anmeldenummer: 13160124.7
(22) Anmeldetag: 20.03.2013
(51) Int. Cl.: B21J 15/10, B21J 15/30, F16M 11/04

(54) **Anordnung aus Nietbügel und Nietbügelaufnahme mit einer Nietbügelkopplung**
Assembly of a riveter frame, its carrier and their coupling
Ensembe formé d'un étrier de machine de rivetage, son support, et leur accouplement

(30) Priorität: 24.04.2012 DE 102012103576
(43) Veröffentlichungstag der Anmeldung: 30.10.2013
(73) Patentinhaber: TKR Spezialwerkzeuge GmbH, 58285 Gevelsberg (DE)
(72) Erfinder: Weyland, Thorsten, 58239 Schwerte (DE)
(74) Vertreter: Kalkoff & Partner

(56) Entgegenhaltungen:
- US-A1- 2004 057 811
- US-A1- 2011 048 099

## Beschreibung

Die Erfindung betrifft eine Nietbügelkopplung zur Verbindung eines Nietbügels mit einer an einer Antriebsvorrichtung angeordneten Nietbügelaufnahme, mit einem an dem Einen von Nietbügel und Nietbügelaufnahme angeordneten Innengewinde und einem an dem Anderen von Nietbügel und Nietbügelaufnahme angeordneten, dem Innengewinde entsprechenden Außengewinde.
Zur Anordnung eines Nietbügels an einer Nietbügelaufnahme einer Antriebsvorrichtung sind insbesondere Schraubverbindungen bekannt, mittels derer der Nietbügel auf die Nietbügelaufnahme aufgeschraubt werden kann. Aufgrund der hohen auftretenden Kräfte beim Nietvorgang und der zum Teil besonders großen Nietbügel weist die Schraubverbindung eine besonders lange Schaftlänge auf. Ein Auswechseln des Nietbügels, das bei derartigen Werkzeugen und insbesondere bei Werkzeugen die im Reparaturbereich von Kraftfahrzeugen eingesetzt werden häufig vorkommt, ist zeitaufwendig und insbesondere bei großen und schweren Nietbügeln ausgesprochen umständlich. Hinzu kommt, dass sich die Schraubverbindung aufgrund der auftretenden Kräfte beim Nietvorgang häufig löst.
Der Erfindung liegt somit die Aufgabe zugrunde, eine Nietbügelkopplung, einen Nietbügel und eine Nietbügelaufnahme zur besonders leichten und schnellen Auswechselbarkeit des Nietbügels an der Nietbügelaufnahme bereitzustellen.

Die Erfindung löst die Aufgabe durch eine Anordnung aus Nietbügel und Nietbügelaufnahme mit einer Nietbügelkopplung mit den Merkmalen des Anspruchs 1. Vorteilhafte Weiterbildungen der Erfindung sind in den abhängigen Ansprüchen angegeben.

Die erfindungsgemäße Anordnung weist eine an einer Antriebsvorrichtung angeordnete Nietbügelaufnahme, mit einem an dem einen von Nietbügel und Nietbügelaufnahme angeordneten Innengewinde und einem an dem anderen von Nietbügel und Nietbügelaufnahme angeordneten, dem Innengewinde entsprechenden Außengewinde auf, wobei das Außengewinde und das Innengewinde in Gewindelängsachsenrichtung verlaufende, gewindefreie Abschnitte aufweist, die derart ausgebildet sind, dass der Nietbügel auf oder in die Nietbügelaufnahme steckbar und anschließend unter Gewindeeingriff zur Fixierung verdrehbar ist.

Erfindungsgemäß sind somit sowohl am Außengewinde als auch am Innengewinde gewindefreie Abschnitte und Gewindeabschnitte (Außengewindeabschnitte und Innengewindeabschnitte) angeordnet. Die gewindefreien Abschnitte und die Gewindeabschnitte sind koaxial zu einer Gewindelängsachse und jeweils abwechselnd angeordnet. Die jeweilige Anzahl von gewindefreien Abschnitten und Gewindeabschnitten kann sowohl am Außengewinde als auch am Innengewinde identisch sein. Auch die jeweilige Größe (Länge des vom jeweiligen Abschnitts umfassten Kreisbogenabschnitts) der gewindefreien Abschnitte und Gewindeabschnitte ist vorteilhafter Weise sowohl am Innengewinde als auch am Außengewinde identisch, um eine besonders sichere Fixierung zu erreichen, wobei die gewindefreien Abschnitte gleich groß, vorteilhafterweise geringfügig größer als die Gewindeabschnitte ausgebildet sind.

Die Innengewindeabschnitte und die Außengewindeabschnitte sind aufeinander abgestimmt. D.h., dass bspw. die Steigung, die Form oder auch die Gangabstände der Außen- und Innengewinde aufeinander angepasst bzw. identisch ausgebildet sind.

Vorteilhafterweise weisen die Gewindegänge eine Steigung von 0,5 mm bis 5 mm, bevorzugt 1 mm bis 4,5 mm, besonders bevorzugt 1,5 mm bis 4 mm, vorzugsweise 2,0 mm bis 3,5 mm auf und die Gewinde sind als Trapezgewinde oder als Rundgewinde ausgebildet. Um ferner einen besonders sicheren Gewindeeingriff zwischen dem Innen- und dem Außengewinde zu ermöglichen, sind die Innen- und die Außengewinde vorzugsweise als eingängige Gewinde ausgebildet.

Durch die Anordnung von gewindefreien Abschnitten und Gewindeabschnitten können der Nietbügel und die Nietbügelaufnahme über annähernd die gesamte Schaftlänge des Gewindes auf oder ineinander gesteckt werden, so dass zur Fixierung des Nietbügels an der Nietbügelaufnahme nur eine kurze Drehbewegung des Nietbügels notwendig ist. D. h., es bedarf keiner vollständigen Umdrehung des Nietbügels gegenüber der Nietbügelaufnahme, um den Nietbügels an der Nietbügelaufnahme zu fixieren.
Das Innengewinde wie auch das Außengewinde sind somit sowohl an der Nietbügelaufnahme als auch an dem Nietbügel anordbar. Sollte somit das Außengewinde am Nietbügel angeordnet sein, ist das Innengewinde an der Nietbügelaufnahme angeordnet und umgekehrt. Die weitere Beschreibung erfolgt jedoch unter der Annahme, dass das Innengewinde am Nietbügel und das Außengewinde an der Nietbügelaufnahme angeordnet ist, wobei diese Annahme nicht einschränkend aufzufassen ist, sondern grundsätzlich für alle hier beschriebenen Merkmale und Beispiele beide Varianten möglich sind.

Die Art der Antriebsvorrichtung ist beliebig, wobei für derartige Nietbügel und Nietbügelkopplungen zumeist ein Pneumatik-Hydraulik-Druckübersetzer (Hydraulikantriebe) eingesetzt wird, da dieser die zum Verpressen von Nieten notwendigen hohen Pressdrucke besonders einfach bereitstellen kann.

Um eine möglichst sichere Fixierung des Nietbügels an oder in der Nietbügelaufnahme zu erreichen, ist der Nietbügel gemäß einer Weiterbildung der Erfindung zwischen einer Ausgangsposition, in der der in oder auf der Nietbügelaufnahme angeordnete Nietbügel von der Nietbügelaufnahme entfernbar ist und einer Gebrauchsposition, in der das Innengewinde und das Außengewinde in Eingriff befindlich sind und der Nietbügel sich mit einer Anlagefläche an einer an der Nietbügelaufnahme angeordneten Stützfläche abstützt, verdrehbar. Durch eine Drehbewegung des Nietbügels wird der Nietbügel mit seiner Anlagefläche in axialer Richtung an die Stützfläche gepresst, d. h. es entsteht eine klemmende Verbindung zwischen dem Gewinde des Innen- und Außengewindes und der Anlage- und Stützfläche. Insbesondere im Betrieb des Nietbügels wird hierbei bspw. ein Verdrehen, Kippen oder Verkanten des Nietbügels verhindert.
Um die Fixierung des Nietbügels an der Nietbügelaufnahme besonders leicht herbeiführen zu können, sollte der Drehwinkel (die Länge der Drehbewegung), um den der Nietbügel zur Fixierung an der Nietbügelaufnahme gedreht werden muss, möglichst klein sein.
Deshalb sind nach einer Weiterbildung der Erfindung sowohl am Innengewinde als auch am Außengewinde jeweils mindestens zwei gewindefreie Abschnitte ausgebildet. Der hierbei notwendige Drehwinkel des Nietbügels, um von der Ausgangsposition in die Gebrauchsposition zu gelangen, wird bei der Anordnung von zwei gewindefreien Abschnitten gegenüber einem gewindefreien Abschnitt halbiert. Auch bei der Anordnung weiterer gewindefreier Abschnitte erfolgt jeweils eine weitere Verkleinerung des Drehwinkels, so dass sich mit jedem weiteren gewindefreien Abschnitt auch der Drehwinkel zwischen der Ausgangs- und der Gebrauchsposition verkleinert.

Besonders bevorzugt beträgt der Drehwinkel zwischen der Ausgangs- und der Gebrauchsposition bis zu 180°, bevorzugt zwischen 180° und 30°, besonders bevorzugt zwischen 90° und 45° und vorzugsweise 60° +/- 10°.

Die notwendige Anzahl von gewindefreien Abschnitten für diese Drehwinkel können besonders wirtschaftlich hergestellt werden und ermöglichen eine koaxial besonders gleichmäßige Fixierung des Nietbügels an der Nietbügelaufnahme. Ferner ermöglichen diese Drehwinkel dem Nutzer ein besonders einfaches Entfernen des Nietbügels von der Nietbügelaufnahme, da die gewindefreien Abschnitte ausreichend groß sind, um ein Verhaken der gewindefreien Abschnitte und der Gewindeabschnitte zu vermeiden.

Die gewindefreien Abschnitte können unterschiedlich hergestellt werden. Bspw. ist es möglich, ein vollständiges Gewinde herzustellen und aus diesem Gewindeabschnitte in regelmäßigen Abständen zu entfernen. Die jeweiligen Anfangs- und Endpunkte der dabei entstehenden Gewindeabschnitte sind jedoch in unterschiedlichen senkrecht zu einer Gewindelängsachse stehenden Ebenen angeordnet, wodurch zum Erreichen des kleinsten Drehwinkels zwischen der Ausgangs- und der Gebrauchsposition der Nietbügel nur in einer Position auf die Nietbügelaufnahme auf-/eingesetzt werden kann.

Besonders bevorzugt sind daher jeweils die Anfangspunkte der Innengewindeabschnitte und jeweils die Endpunkte der Innengewindeabschnitte und/oder jeweils die Anfangspunkte der Außengewindeabschnitte und jeweils die Endpunkte der Außengewindeabschnitte in einer gemeinsamen senkrecht zur Gewindelängsachse verlaufenden Ebene angeordnet.

D. h., die jeweiligen Innengewindeabschnitte sind alle identisch ausgebildet, so dass sowohl ihre Anfangspunkte als auch ihre Endpunkt jeweils in einer gemeinsamen, senkrecht zur der Gewindelängsachse verlaufenden Ebene angeordnet sind. Es handelt sich bei den Innengewindeabschnitten somit um identische Kopien voneinander, wobei die Anfangs- und Endpunkte der Kopien in der jeweiligen Ebene um einen Winkel von bspw. 180°, 120°, 90°, 60° oder 45° zueinander versetzt sind.

Ebenso wie die Innengewindeabschnitte sind vorzugsweise auch die Außengewindeabschnitte als identische Kopien ausgebildet. D. h., auch bei den Außengewindeabschnitten sind die jeweiligen Anfangspunkte und die jeweiligen Endpunkte in jeweils einer gemeinsamen, senkrecht zur Gewindelängsachse angeordneten Ebene angeordnet. Hierdurch ist es in vorteilhafter Weise möglich, den Nietbügel in jeder möglichen Position auf/ in die Nietbügelaufnahme aufzusetzen/ einzuführen und grundsätzlich den (von der Anzahl der gewindefreien Abschnitte abhängigen) kleinstmöglichen Drehwinkel zwischen der Ausgangsposition und der Endposition zu erhalten.

Um im Betrieb des Nietbügels das Lösen des Nietbügels aus der Gebrauchsposition zu verhindern, ist nach einer Weiterbildung der Erfindung eine den Nietbügel in der Gebrauchsposition arretierenden Verriegelung angeordnet.

Die Verriegelung kann bspw. als Druckknopf- und/oder Federverriegelung ausgebildet sein. Besonders bevorzugt weist die Verriegelung jedoch einen Riegelbolzen auf, dessen Längsachse quer zur Gewindelängsachse ausgerichtet ist. Die quer zur Gewindelängsachse ausgerichtete Längsachse des Riegelbolzens ermöglicht dabei eine besonders einfache Konstruktion des Riegelbolzens. Unter quer zur Gewindelängsachse wird dabei vorzugsweise ein Winkel von ca. 90° +/- 10° verstanden.

Der Riegelbolzen kann derart ausgebildet sein, dass er in das Innengewinde, das Außengewinde oder in das Innen- und Außengewinde teilweise und/oder vollständig eingreift. Auch kann der Riegelbolzen derart angeordnet sein, dass er das Innengewinde, das Außengewinde oder das Innen- und Außengewinde schneidet, d. h. in eines oder beide Gewinde eingreift.

Der Riegelbolzen ist bspw. in den Nietbügel und/oder die Nietbügelaufnahme einsteckbar. Auch kann der Riegelbolzen oder die Verriegelung kippbar -bspw. als Hebel- oder eindrückbar -bspw. als Druckknopf- ausgebildet sein. Ferner kann der Riegelbolzen separat, fest verbunden oder auch lösbar mit der Nietbügelaufnahme und/oder dem Nietbügel ausgebildet sein.

Nach einer Weiterbildung der Erfindung ist der Riegelbolzen zwischen einer Freigabeposition und einer Verriegelungsposition verstellbar. Dies kann wie bereits ausgeführt, durch bspw. Einschieben, Einstecken, Eindrücken oder Kippen des Riegelbolzens und in Eingriff in das Innen- und/oder Außengewinde erfolgen. Auch kann der Riegelbolzen bspw. mit einem Gewinde ausgebildet sein, das in eine Riegelbolzenaufnahme einschraubbar ist, so dass der Riegelbolzen mit der Nietbügelaufnahme und/ oder dem Nietbügel verschraubbar ist.

Nach einer Weiterbildung der Erfindung ist der Riegelbolzen zum Verriegeln des Nietbügels in der Gebrauchsposition zwischen der Freigabeposition und der Verriegelungsposition um die Riegelbolzenlängsachse drehbar. Der drehbare Riegelbolzen kann von dem Nietbügel oder der Nietbügelaufnahme. lösbar und/ oder entnehmbar ausgebildet sein. Vorzugsweise ist der Riegelbolzen jedoch unlösbar, d. h. nicht zerstörungsfrei entfernbar mit dem Nietbügel oder der Nietbügelaufnahme verbunden.

Um eine gute Drehbarkeit des Riegelbolzens zu ermöglichen, ist dieser vorteilhafter Weise im Querschnitt kreisförmig ausgebildet. Ferner ist der Riegelbolzen vorteilhafterweise derart angeordnet, dass er einen am Nietbügel angeordneten Gewindeabschnitt schneidet, d. h. er tangiert zumindest den Gewindeabschnitt am Nietbügel.

Um eine mit der Drehbarkeit zusammenhängende Verriegelung des Nietbügels an der Nietbügelaufnahme zu ermöglichen, weist der im Nietbügel oder der an der Nietbügelaufnahme angeordnete Riegelbolzen bspw. eine Aussparung auf, die zum Eingriff in einen Gewindeabschnitt /gewindefreien Abschnitt ausgebildet ist. Besonders bevorzugt weist der Riegelbolzen eine Sperrkante auf, die in der Verriegelungsposition eine Drehbewegung des Nietbügels aus der Gebrauchsposition in die Ausgangsposition verhindert.

In der Gebrauchsposition ist ein Gewindeabschnitt des Nietbügels in Eingriff mit einem Gewindeabschnitt der Nietbügelaufnahme. Die Sperrkante bzw. die Sperrkanten sind vorzugsweise derart am Riegelbolzen angeordnet, dass sie in der Verriegelungsposition die Flanken der sich in Eingriff befindlichen Innen- und Außengewindeabschnitte versperren, so dass die beiden sich in Eingriff befindlichen Gewindeabschnitte nicht oder zumindest nicht vollständig gegeneinander verdrehbar sind. Eine derartig angeordnete Sperrkante ist besonders stabil und kann besonders einfach gewartet oder ggf. repariert werden, da sie leicht zugänglich ist. Die Sperrkante kann bspw. als ein Bestandteil der Aussparung oder des Riegelbolzens oder auch als zusätzlicher, mit dem Riegelbolzen verbundener Baukörper ausgebildet sein.

Im Weiteren wird die Erfindung anhand mehrerer Ausführungsbeispiele näher beschrieben. Es zeigt:
- Fig. 1: schematisch und in einer perspektivischen Darstellung eine Ausführungsform einer Nietbügelkopplung mit einem Nietbügel und einer Nietbügelaufnahme;
- Fig. 2: schematisch und in einer perspektivischen teilgeschnittenen Darstellung den Nietbügel und die Nietbügelaufnahme aus Fig. 1 in einer Ausgangsposition;
- Fig. 3: schematisch und in einer perspektivischen teilgeschnittenen Darstellung den Nietbügel und die Nietbügelaufnahme aus Fig. 1 in einer Gebrauchsposition;

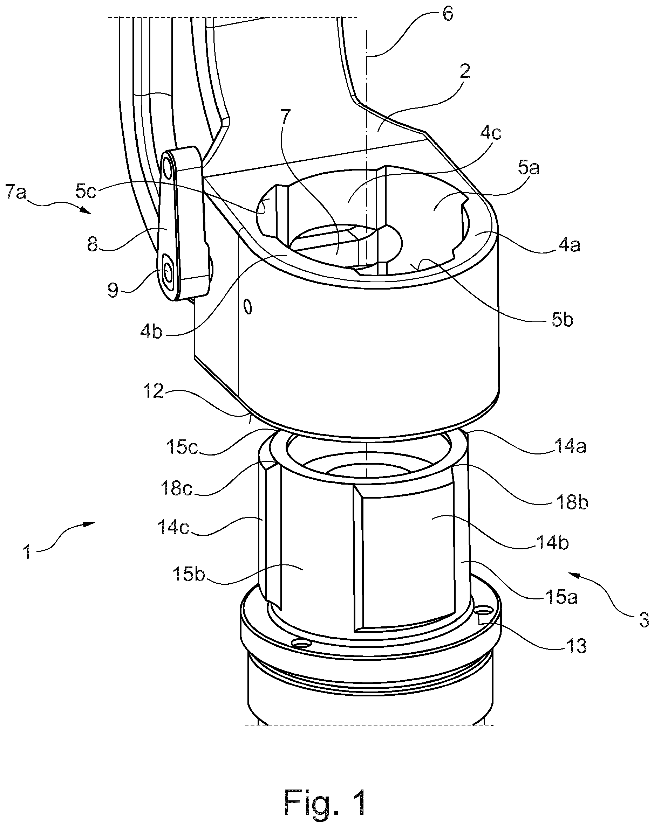

Fig. 1 zeigt eine Nietbügelkopplung 1 mit einem Nietbügel 2 und einer an einem Hydraulikantrieb (hier nicht dargestellt) angeordneten Nietbügelaufnahme 3. Der Nietbügel 2 weist drei Innengewindeabschnitte 4a, 4b, 4c und drei innengewindefreie Abschnitte 5a, 5b, 5c auf. Die Innengewindeabschnitte 4a, 4b, 4c und die innengewindefreien Abschnitte 5a, 5b, 5c sind koaxial und mit einem gleichmäßig Abstand zueinander um eine Gewindelängsachse 6 (hier als gestrichelte Linie dargestellt) angeordnet und jeweils gleich groß. D. h. die Strecke der von den Gewindeabschnitten 4a, 4b, 4c und die Strecke die von den gewindefreien Abschnitten 5a, 5b, 5c jeweils umfassten Kreisbogenabschnitte ist jeweils gleich lang.

Ein gewindefreier Abschnitt 5a, 5b, 5c und ein Gewindeabschnitt 4a, 4b, 4c umfassen dabei gemeinsam einen Winkel von 120° um die Gewindeachse 6. Der gewindefreie Abschnitt 5a, 5b, 5c umfasst einen Winkel von ca. 62°, der Gewindeabschnitt einen Winkel von ca. 58°. Die Differenz zwischen einem gewindefreien Abschnitt 5a, 5b, 5c und einem Gewindeabschnitt 4a, 4b, 4c beträgt somit ca. 4°. Alternativ kann auch eine Differenz im Bereich zwischen 0,5° bis 20° (oder größer) ausgebildet sein, wobei der gewindefreie Abschnitt immer einen gleich großen, vorzugsweise einen geringfügig größeren Winkel als der Gewindeabschnitt umfasst. D.h., die Strecke des von dem gewindefreien Abschnitts umfassten Kreisbogens ist immer gleich lang oder zumindest geringfügig länger als die Strecke des von dem Gewindeabschnitt (Innen- und/oder Außengewinde) umfassten Kreisbogens.

Weiter ist am Nietbügel 2 ein drehbar gelagerter Riegelbolzen 7 angeordnet. Der Riegelbolzen 7 schneidet einen Gewindeabschnitt 4a des Nietbügels 2 in zentraler Position und steht mit einem ersten Ende 7a aus dem Nietbügel 2 heraus. Der Riegelbolzen 7 ist im Querschnitt kreisförmig ausgebildet, wobei das aus dem Nietbügel 2 herausstehende Ende 7a des Riegelbolzens 7 oval geformt ist. Das herausstehende Ende 7a des Riegelbolzens 7 ist mit einem Stellhebel 8 verbunden. Der Riegelbolzen 7 ist um seine Längsachse 9 drehbar im Nietbügel 2 gelagert. Die Längsachse 9 ist quer, hier in einem Winkel von 90° zur Gewindelängsachse 6 ausgerichtet, angeordnet.
Weiter weist der Riegelbolzen 7 zwei flächige Aussparungen 10a, 10b auf. Die flächigen Aussparungen 10a, 10b sind entlang der Längsachse 9 im Bereich des Gewindeabschnitts 4a angeordnet.

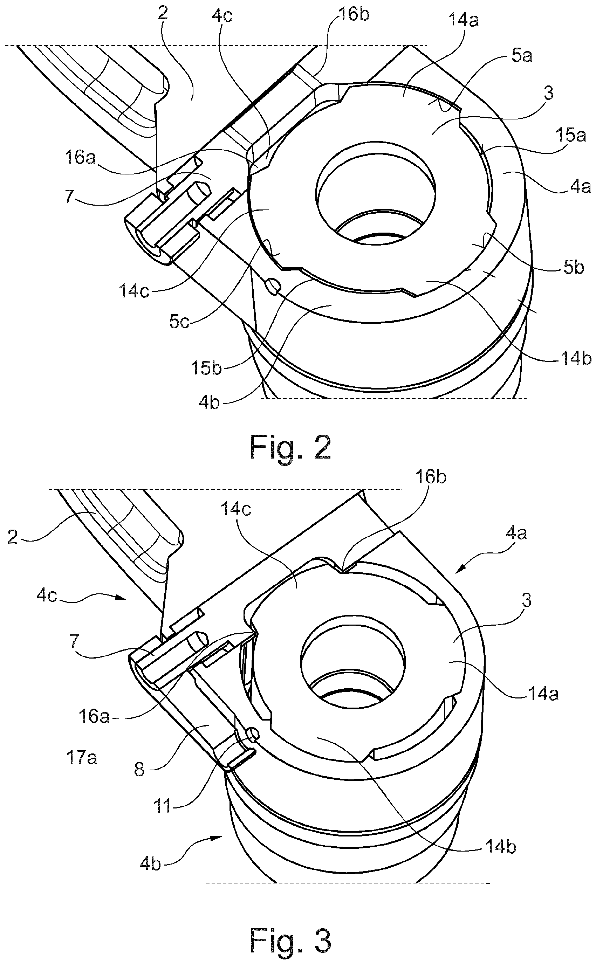

In Fig. 1 ist der Riegelbolzen 7 in einer Freigabeposition dargestellt. Er kann über eine Kippbewegung des Stellhebels 8 von der Freigabeposition in eine Verriegelungsposition (siehe Figur 3) gedreht werden. Um ein Zurückkippen des Feststellhebels 8 aus der Verriegelungsposition zu verhindern, ist am Stellhebel 8 eine Kugelarretierung 10 angeordnet, die in der Verriegelungsposition mit einer am Nietbügel 2 angeordneten Kugelaufnahme 11 in Eingriff kommt.
Weiter ist am Nietbügel eine Anlagefläche 12 zum Abstützen an einer an der Nietbügelaufnahme 3 angeordneten Stützfläche 13 ausgebildet. Weiter sind an der Nietbügelaufnahme 3 Außengewindeabschnitte 14a, 14b, 14c und außengewindefreie Abschnitte 15a, 15b, 15c angeordnet. Die Außengewindeabschnitte 14a, 14b, 14c und die die außengewindefreien Abschnitte 15a, 15b, 15c sind ebenfalls koaxial und gleichmäßig um die Gewindelängsachse 6 angeordnet. Die Länge der Außengewindeabschnitte 14a, 14b, 14c und der außengewindefreien Abschnitte 15a, 15b ist ebenfalls identisch und entspricht der Länge der Innengewindeabschnitte 4a, 4b, 4c und innengewindefreien Abschnitte 5a, 5b, 5c.
Die Innengewindeabschnitte 4a, 4b, 4c sind jeweils identische Kopien voneinander. D. h., dass neben der Gewindeart und der Gewindeform auch die jeweiligen Gewindeanfangspunkte 18b, 18c in einer senkrecht zur Gewindelängsachse 6 verlaufenden gemeinsamen Ebene (hier nicht dargestellt) ebenso wie ihre jeweiligen Gewindeendpunkte auch in einer weiteren senkrecht zur Gewindelängsachse 6 verlaufenden Ebene angeordnet sind.

Ebenso wie die Innengewindeabschnitte 4a, 4b, 4c sind auch die Außengewindeabschnitte 14a, 14b, 14c jeweils identische Kopien voneinander, deren jeweiligen Anfangspunkte und Endpunkte jeweils in einer gemeinsamen senkrecht zur Gewindelängsachse 6 verlaufenden Ebene liegen.

Die jeweiligen Gewindeanfangspunkte (Innen- und Außengewinde) sind ebenso wie die jeweiligen Gewindeendpunkte (Innen- und Außengewinde) in ihrer jeweiligen Ebene in einem Winkel von 120° um die Gewindeachse 6 versetzt zueinander angeordnet.

Durch die identische Ausbildung der Innengewindeabschnitte 4a, 4b, 4c und der entsprechenden ebenfalls identisch ausgebildeten Außengewindeabschnitte 14a, 14b, 14c ist es möglich, den Nietbügel in jeder der drei möglichen Positionen -da drei Gewindeabschnitte- auf die Nietbügelaufnahme aufzusetzen und mit einer ca. 62° Drehbewegung von der Ausgangsposition in die Gebrauchsposition zu bewegen und an der Nietbügelaufnahme zu fixieren.

Fig. 2 zeigt in einer teilweisen Schnittdarstellung und schematisch den Nietbügel 2 und die Nietbügelaufnahme 3 aus Fig. 1 in der Ausgangsposition. Der Nietbügel 2 ist auf die Nietbügelaufnahme 3 aufgesteckt. Die Außengewindeabschnitte 14a, 14b, 14c sind dabei in Eingriff mit den gewindefreien Abschnitten 5a, 5b, 5c Innengewindes und die Innengewindeabschnitte 4a, 4b, 4c sind in Eingriff mit den gewindefreien Abschnitten 15a, 15b, 15c des Außengewindes.

Der Riegelbolzen 7 ist in der Freigabeposition. An den flächigen Aussparungen 10a, 10b sind zwei Sperrkanten 16a, 16b am Riegelbolzen 7 angeordnet.

Die Innengewindeabschnitte 4a, 4b, 4c sind jeweils im 60° Winkel zu den jeweiligen Außengewindeabschnitten 14a, 14b, 14c angeordnet. Die Anlagefläche 12 und die Stützfläche 13 sind kontaktlos.

Fig. 3 zeigt den Nietbügel 2 und die Nietbügelaufnahme 3 aus Figur 1 in der Gebrauchsposition, d. h., die Innengewindeabschnitte 4a, 4b, 4c sind in Eingriff mit den Außengewindeabschnitten 14a, 14b, 14c. Der Anlagefläche 12 und die Stützfläche 13 sind in Kontakt.

Der Riegelbolzen 7 ist in der Verriegelungsposition, so dass die Sperrkanten 16a, 16b ein Herausdrehen des sich mit dem Innengewindeabschnitt 4a in Eingriff befindlichen Außengewindeabschnitts 14c verhindert.

Weiter befindet sich die Kugelarretierung 10 (hier nicht dargestellt) am Stellhebel 8 in Eingriff mit der Kugelaufnahme 11, so dass ein unbeabsichtigtes Verdrehen des Stellhebels 8 von der Verriegelungsposition in die in Fig. 2 dargestellte Freigabeposition verhindert wird.

## Patentansprüche

1. Anordnung aus Nietbügel (2) und Nietbügelaufnahme (3) mit einer Nietbügelkopplung mit
- einem an dem Einen von Nietbügel (2) und Nietbügelaufnahme (3) angeordneten Innengewinde (4a, 4b, 4c) und
- einem an dem Anderen von Nietbügel (2) und Nietbügelaufnahme (3) angeordneten, dem Innengewinde (4a, 4b, 4c) entsprechenden Außengewinde (14a, 14b, 14c),
**dadurch gekennzeichnet, dass**
das Außengewinde (14a, 14b, 14c) und das Innengewinde (4a, 4b, 4c) in Gewindelängsachsenrichtung (6) verlaufende, gewindefreie Abschnitte (5a, 5b, 5c, 15a, 15b, 15c) aufweist, die derart ausgebildet sind, dass der Nietbügel (2) auf oder in die Nietbügelaufnahme (3) steckbar und anschließend unter Gewindeeingriff zur Fixierung verdrehbar ist.

2. Anordnung aus Nietbügel und Nietbügelaufnahme mit einer Nietbügelkopplung nach Anspruch 1, **dadurch gekennzeichnet, dass** der Nietbügel (2) zwischen
- einer Ausgangsposition, in der der in oder auf der Nietbügelaufnahme (3) angeordnete Nietbügel (2) von der Nietbügelaufnahme (3) entfernbar ist und
- einer Gebrauchsposition, in der das Innengewinde (4a, 4b, 4c) und das Außengewinde (14a, 14b, 14c) in Eingriff befindlich sind und der Nietbügel (2) sich mit einer Anlagefläche (12) an einer an der Nietbügelaufnahme (3) angeordneten Stützfläche (13) abstützt,
verdrehbar ist.

3. Anordnung aus Nietbügel und Nietbügelaufnahme mit einer Nietbügelkopplung nach Anspruch 1 oder 2, **dadurch gekennzeichnet, dass** am Innengewinde (4a, 4b, 4c) und am Außengewinde (14a, 14b, 14c) jeweils mindestens zwei gewindefreie Abschnitte (5a, 5b, 5c, 15a, 15b, 15c) ausgebildet sind.

4. Anordnung aus Nietbügel und Nietbügelaufnahme mit einer Nietbügelkopplung nach einem der vorhergehenden Ansprüche, **dadurch gekennzeichnet, dass** der Drehwinkel zwischen der Ausgangsposition und der Gebrauchsposition bis zu 180°, bevorzugt zwischen 180° und 30°, besonders bevorzugt zwischen 90° und 45° und vorzugsweise 60° +/- 10° beträgt.

5. Anordnung aus Nietbügel und Nietbügelaufnahme mit einer Nietbügelkopplung nach einem der vorhergehenden Ansprüche, **dadurch gekennzeichnet, dass** die Anfangspunkte (18b, 18c) und die Endpunkte der Innengewindeabschnitte (4a, 4b, 4c) und/oder die Anfangspunkte und die Endpunkte der Außengewindeabschnitte (14a, 14b, 14c) in einer senkrecht zur Gewindelängsachse (6) verlaufenden Ebene angeordnet sind.

6. Anordnung aus Nietbügel und Nietbügelaufnahme mit einer Nietbügelkopplung nach einem der vorhergehenden Ansprüche, **gekennzeichnet, durch** eine den Nietbügel (2) in der Gebrauchsposition arretierende Verriegelung.

7. Anordnung aus Nietbügel und Nietbügelaufnahme mit einer Nietbügelkopplung nach dem Anspruch 6, **dadurch gekennzeichnet, dass** die Verriegelung einen Riegelbolzen (7) aufweist, dessen Längsachse (9) quer zur Gewindelängsachse (6) ausgerichtet ist.

8. Anordnung aus Nietbügel und Nietbügelaufnahme mit einer Nietbügelkopplung nach dem Anspruch 7, **dadurch gekennzeichnet, dass** der Riegelbolzen (7) zwischen einer Freigabeposition und einer Verriegelungsposition verstellbar ist.

9. Anordnung aus Nietbügel und Nietbügelaufnahme mit einer Nietbügelkopplung nach dem Anspruch 8, **dadurch gekennzeichnet, dass** der Riegelbolzen (7) zum Verriegeln des Nietbügels (2) in der Gebrauchsposition zwischen der Freigabeposition und der Verriegelungsposition um die Längsachse (9) drehbar ist.

10. Anordnung aus Nietbügel und Nietbügelaufnahme mit einer Nietbügelkopplung nach dem Anspruch 9, **dadurch gekennzeichnet, dass** der Riegelbolzen (7) eine Sperrkante (17a, 17b) aufweist, die in der Verriegelungsposition eine Drehbewegung des Nietbügels (2) aus der Gebrauchsposition in die Ausgangsposition verhindert.

## Claims

1. An assembly of a riveter frame (2) and a riveter frame carrier (3) with a riveter frame coupling, having
- an inner thread (4a, 4b, 4c) arranged on the one of the riveter frame (2) and riveter frame carrier (3), and
- an outer thread (14a, 14b, 14c) that is arranged on the other of the riveter frame (2) and riveter frame carrier (3) and corresponds to the inner thread (4a, 4b, 4c),
**characterized in that**
the outer thread (14a, 14b, 14c) and the inner thread (4a, 4b, 4c) have thread-free sections (5a, 5b, 5c, 15a, 15b, 15c) that run in the direction of the longitudinal axis of the thread (6) and are designed such that the riveter frame (2) can be plugged on or in the riveter frame carrier (3) and can then be rotated to be secured while the threads mesh.

2. The assembly of the riveter frame and riveter frame carrier with a riveter frame coupling according to claim 1, **characterized in that** the riveter frame (2) can be rotated between
- a home position in which the riveter frame (2) that is arranged in or on the riveter frame carrier (3) can be removed from the riveter frame carrier (3), and
- a use position in which the inner thread (4a, 4b, 4c) and the outer thread (14a, 14b, 14c) are meshed, and a contact surface (12) of the riveter frame (2) abuts a support surface (13) arranged on the riveter frame carrier (3).

3. The assembly of the riveter frame and riveter frame carrier with a riveter frame coupling according to claim 1 or 2, **characterized in that** there are at least two thread-free sections (5a, 5b, 5c, 15a, 15b, 15c) formed respectively on the inner thread (4a, 4b, 4c) and on the outer thread (14a, 14b, 14c).

4. The assembly of the riveter frame and riveter frame carrier with a riveter frame coupling according to one of the preceding claims, characterized that the rotary angle between the home position and the use position is up to 180°, preferably between 180° and 30°, particularly preferably between 90° and 45°, and preferentially 60° ± 10°.

5. The assembly of the riveter frame and riveter frame carrier with a riveter frame coupling according to one of the preceding claims, **characterized in that** the starting points (18b, 18c) and the endpoints of the inner thread sections (4a, 4b, 4c), and/or the starting points and the endpoints of the outer thread sections (14a, 14b, 14c), are arranged in a plane running perpendicular to the longitudinal axis of the thread (6).

6. The assembly of the riveter frame and riveter frame carrier with a riveter frame coupling according to one of the preceding claims, **characterized by** a lock which locks the riveter frame (2) in the use position.

7. The assembly of the riveter frame and riveter frame carrier with a riveter frame coupling according to claim 6, **characterized in that** the lock has a lock pin (7) whose longitudinal axis (9) is arranged transversely to the longitudinal axis of the thread (6).

8. The assembly of the riveter frame and riveter frame carrier with a riveter frame coupling according to claim 7, **characterized in that** the lock pin (7) can be adjusted between a released position and a locked position.

9. The assembly of the riveter frame and riveter frame carrier with a riveter frame coupling according to claim 8, **characterized in that** the lock pin (7) can be rotated about the longitudinal axis (9) to lock the riveter frame (2) in the use position between the released position and the locked position.

10. The assembly of the riveter frame and riveter frame carrier with a riveter frame coupling according to claim 9, **characterized in that** the lock pin (7) has a lock edge (17a, 17b) that, in the locked position, prevents a rotary movement of the riveter frame (2) from the use position to the home position.

## Revendications

1. Ensemble constitué d'un étrier de machine de rivetage et d'un support d'étrier de machine de rivetage avec un accouplement d'étrier de machine de rivetage, comprenant :
- un filet intérieur (4a, 4b, 4c) disposé sur l'un parmi l'étrier de machine de rivetage (2) et le support d'étrier de machine de rivetage (3), et
- un filet extérieur (14a, 14b, 14c) correspondant au filet intérieur (4a, 4b, 4c), disposé sur l'autre parmi l'étrier de machine de rivetage (2) et le support d'étrier de machine de rivetage (3),
**caractérisé en ce que**
- le filet extérieur (14a, 14b, 14c) et le filet intérieur (4a, 4b, 4c) présentent des sections sans filet (5a, 5b, 5c, 15a, 15b, 15c) s'étendant dans la direction de l'axe longitudinal de filet (6), lesquelles sont conçues de telle façon que l'étrier de machine de rivetage (2) peut être enfoncé sur ou dans le support d'étrier de machine de rivetage (3), puis tourné en prise filetée pour la fixation.

2. Ensemble constitué d'un étrier de machine de rivetage et d'un support d'étrier de machine de rivetage avec un accouplement d'étrier de machine de rivetage selon la revendication 1, **caractérisé en ce que** l'étrier de machine de rivetage (2) peut tourner entre
- une position de départ, dans laquelle l'étrier de machine de rivetage (2) disposé dans ou sur le support d'étrier de machine de rivetage (3) peut être séparé du support d'étrier de machine de rivetage (3), et
- une position d'utilisation, dans laquelle le filet intérieur (4a, 4b, 4c) et le filet extérieur (14a, 14b, 14c) sont en prise et l'étrier de machine de rivetage (2) s'appuie avec une surface de contact (12) sur une surface d'appui (13) disposée sur le support d'étrier de machine de rivetage (3).

3. Ensemble constitué d'un étrier de machine de rivetage et d'un support d'étrier de machine de rivetage avec un accouplement d'étrier de machine de rivetage selon la revendication 1 ou 2, **caractérisé en ce qu'**au moins deux sections sans filet (5a, 5b, 5c, 15a, 15b, 15c) sont formées respectivement sur le filet intérieur (4a, 4b, 4c) et sur le filet extérieur (14a, 14b, 14c).

4. Ensemble constitué d'un étrier de machine de rivetage et d'un support d'étrier de machine de rivetage avec un accouplement d'étrier de machine de rivetage selon l'une des revendications précédentes, **caractérisé en ce que** l'angle de rotation entre la position de départ et la position d'utilisation mesure jusqu'à 180°, de préférence entre 180° et 30°, de façon particulièrement préférentielle entre 90° et 45° et mieux, 60° +/- 10°.

5. Ensemble constitué d'un étrier de machine de rivetage et d'un support d'étrier de machine de rivetage avec un accouplement d'étrier de machine de rivetage selon l'une des revendications précédentes, **caractérisé en ce que** les points de départ (18b, 18c) et les points finaux des sections de filet intérieur (4a, 4b, 4c) et/ou les points de départ et les points finaux des sections de filet extérieur (14a, 14b, 14c) sont disposés dans un plan s'étendant perpendiculairement à l'axe longitudinal de filet (6).

6. Ensemble constitué d'un étrier de machine de rivetage et d'un support d'étrier de machine de rivetage avec un accouplement d'étrier de machine de rivetage selon l'une des revendications précédentes, **caractérisé par** un verrou arrêtant l'étrier de machine de rivetage (2) dans la position d'utilisation.

7. Ensemble constitué d'un étrier de machine de rivetage et d'un support d'étrier de machine de rivetage avec un accouplement d'étrier de machine de rivetage selon la revendication 6, **caractérisé en ce que** le verrou présente un boulon de verrouillage (7) dont l'axe longitudinal (9) est orienté transversalement à l'axe longitudinal de filet (6).

8. Ensemble constitué d'un étrier de machine de rivetage et d'un support d'étrier de machine de rivetage avec un accouplement d'étrier de machine de rivetage selon la revendication 7, **caractérisé en ce que** le boulon de verrouillage (7) peut être déplacé entre une position de libération et une position de verrouillage.

9. Ensemble constitué d'un étrier de machine de rivetage et d'un support d'étrier de machine de rivetage avec un accouplement d'étrier de machine de rivetage selon la revendication 8, **caractérisé en ce que** le boulon de verrouillage (7) peut tourner autour de l'axe longitudinal (9) entre la position de libération et la position de verrouillage pour verrouiller l'étrier de machine de rivetage (2) dans la position d'utilisation.

10. Ensemble constitué d'un étrier de machine de rivetage et d'un support d'étrier de machine de rivetage avec un accouplement d'étrier de machine de rivetage selon la revendication 9, **caractérisé en ce que** le boulon de verrouillage (7) présente un bord de verrouillage (17a, 17b) empêchant un mouvement de rotation de l'étrier de machine de rivetage (2) de la position d'utilisation vers la position de départ dans la position de verrouillage.
